Europäisches Patentamt

European Patent Office

Office européen des brevets

(19)

(11) Veröffentlichungsnummer : **0 171 590**
**B1**

(12) **EUROPÄISCHE PATENTSCHRIFT**

(45) Veröffentlichungstag der Patentschrift :
11.10.89

(21) Anmeldenummer : 85108405.3

(22) Anmeldetag : 06.07.85

(51) Int. Cl.⁴ : **B 60 J   1/10**

(54) Fest eingebaute Fensterscheibe für Kraftfahrzeuge.

(30) Priorität : 09.08.84 DE 3429324

(43) Veröffentlichungstag der Anmeldung :
19.02.86 Patentblatt 86/08

(45) Bekanntmachung des Hinweises auf die Patenterteilung : 11.10.89 Patentblatt 89/41

(84) Benannte Vertragsstaaten :
DE FR GB IT SE

(56) Entgegenhaltungen :
EP--A-- 0 065 336
DE--A-- 2 826 949
DE--A-- 3 148 255

(73) Patentinhaber : **Adam Opel Aktiengesellschaft** .
**Bahnhofsplatz 1 Postfach 1560**
**D-6090 Rüsselsheim (DE)**

(72) Erfinder : **Warner, Hermann**
**Ulmenstrasse 13**
**D-6097 Trebur 1 (DE)**

(74) Vertreter : **Rosenfeld, Jürgen, Dipl. Ing. et al**
**Adam Opel Ag Patentabteilung Bahnhofsplatz 1 Post-**
**fach 17 10**
**D-6090 Rüsselsheim (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

**Beschreibung**

Die Erfindung bezieht sich auf eine fest in einem Fensterrahmen eingebaute, bündig mit der Karosserie verlaufende Fensterscheibe für Kraftfahrzeuge, die über ein mit ihr durch Kleben, Vulkanisieren oder Anspritzen verbundenes Halteprofil mit dem Fensterrahmen verbunden ist, der einen parallel zur Fensterscheibe verlaufenden Flansch besitzt, auf dessen vom Scheibenrand abgewandten Abschnitt das Halteprofil aufgeschoben ist.

Bei einer bekannten Anordnung dieser Art (DE-A-31 48 255) verläuft ein Teil des Fensterrahmens bündig um den Rand der Fensterscheibe herum, wobei der Scheibenrand mit dem Halteprofil lediglich im Bereich des in die Fensteröffnung hineinragenden Abschnittes des Flansches des Fensterrahmens liegt. Die Türdichtung ist durch besondere Mittel außen an dem über den Scheibenrand hinausragenden Abschnitt des Fensterrahmens befestigt.

Der Erfindung liegt die Aufgabe zugrunde, eine Vereinfachung sowohl in der Ausbildung der Teile, insbesondere des Fensterrahmens, als auch in der Montage zu erreichen. Die Halterung der Scheibe, die umspritzt wird, wird verbessert. Das Halteprofil wirkt gleichzeitig als Abdichtprofil. Während das Halteprofil am Fensterrahmen und das Profil an der mittleren Fensterführungsschiene miteinander verbunden werden können, kann das Dichtungsprofil sich über den oberen und hinteren Bereich des Fensterrahmens erstrecken.

Erfindungsgemäß erstrecken sich die Fensterscheibe und das Halteprofil über einen weiteren äußeren Abschnitt des Flansches etwa bis zu dessen Ende, wobei zwischen diesem weiteren Abschnitt des Flansches und dem Halteprofil ein Zwischenraum vorgesehen ist, der zum Aufstecken eines Türdichtungsprofils auf den weiteren Abschnitt des Flansches dient.

In vorteilhafter Weise ist das Halteprofil im Bereich des äußeren Abschnittes des Flansches mit geringer Höhe ausgebildet und bildet im Bereich des Abschnittes des Flansches eine Nase zur Anlage am Flansch und zur Abdichtung. Ein gute Halterung des Halteprofiles am Fensterrahmen ergibt sich dann, wenn das Halteprofil einen etwa dreieckförmigen Bereich aufweist, von dem eine Seite unter Druckspannung diagonal in eine Ausnehmung des Fensterrahmens eingesetzt ist.

Die Erfindung wird anhand eines Ausführungsbeispieles näher erläutert.

In der Zeichnung zeigt :

Fig. 1 den hinteren Fensterabschnitt mit fester Fensterscheibe der hinteren Fahrzeugtür,

Fig. 2 einen Schnitt nach Linie II-II in Fig. 1,

Fig. 3 einen Schnitt nach Linie III-III in Fig. 1 und

Fig. 4 das Gesamtfenster der Hintertür mit der festen Fensterscheibe während des Einbaues.

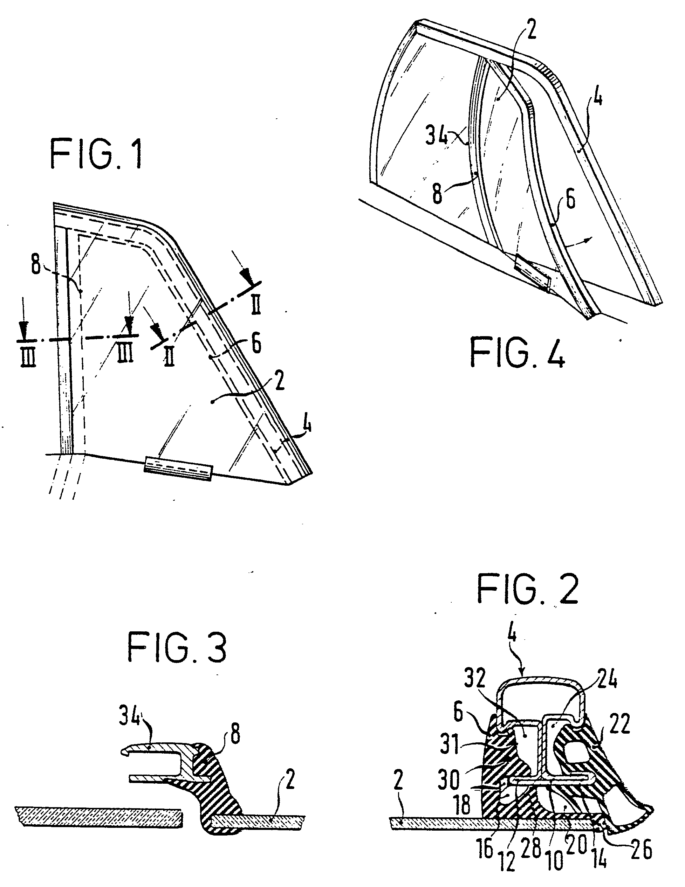

Die Fensterscheibe 2 ist am Fensterrahmen 4 der hinteren Fahrzeugtür fest gehalten, und zwar durch das Halteprofil 6, das, wie Fig. 2 zeigt, auf den Rand der Fensterscheibe 2 aufgespritzt ist. Das Halteprofil 6 verläuft über den oberen und hinteren Bereich der festen Fensterscheibe 2, wie aus Fig. 1 ersichtlich ist. Am vorderen Rand der Fensterscheibe 2 ist das Profil 8 einteilig mit dem Halteprofil 6 an der Fensterscheibe angespritzt, so daß sich keine Stoßstelle mit evtl. Wassereintritt und Geräusch ergibt.

Der Fensterrahmen 4 hat die in Fig. 2 gezeigte Querschnittsform. Er besitzt einen Flansch 10 mit den Abschnitten 12 und 14. Das Halteprofil 6 weist eine Nut 16 auf, in der Abschnitt 12 des Flansches 10 eingreift. Am Nutengrund befinden sich im Abstand angeordnete Anschläge 18, die mit der Scheibenöffnung abgestimmt werden können. Das Halteprofil 6 weist im Bereich des Abschnittes 14 des Flanches 10 eine geringe Höhe auf, so daß sich an dieser Stelle zwischen dem Flansch 10 und dem Halteprofil 6 der Zwischenraum 20 ergibt, in den ein Teil, d. h. eine Dichtlippe des auf den Abschnitt 14 des Flansches 10 aufgeschobenen Dichtungsprofils 22 eingreift. Das Dichtungsprofil 22 ist ferner in einer Ausnehmung 24 des Fensterrahmens 4 festgeklemmt.

Das Halteprofil 6 ist bei 26 um den Rand der Fensterscheibe 2 gespritzt, wodurch Toleranzen der Fensterscheibe ausgeglichen werden können. Es weist ferner eine Nase 28 zur Dichtung und Anlage an den Flansch 10 auf. Ferner besitzt das Halteprofil 6 einen etwa dreieckförmigen Bereich 30, der unter Druckspannung mit einer Seite 31 diagonal in eine Ausnehmung 32 des Fensterrahmens 4 eingesetzt ist, in der er sich fest verankert. Die Herstellung des Profilquerschnittes des Halteprofils 6 bedeutet keine Schwierigkeit, da das Werkzeug nur von außen her mit Schiebern ausgelegt werden muß.

Die Montage der mit den Profilen 6 und 8 versehenen Fensterscheibe 2 geschieht wie folgt und ist in Fig. 4 gezeigt. Zunächst wird das Profil 8 an die mittlere Fensterführungsschiene 34 (Fig. 3) angedrückt. Dann wird die Fensterscheibe 2 mit dem hinteren Rand, entsprechend des Pfeiles in Fig. 4, in den Fensterrahmen 4 eingeschwenkt, wobei der dreieckförmige Bereich 30 des Halteprofiles 6 leicht nach innen ausgebogen wird, damit er über den Flansch 10 gleiten kann. Als letzter Arbeitsgang wird der Bereich 30 des Halteprofiles 6 in die Ausnehmung 32 des Fensterrahmens 4 eingedrückt. Es ergibt sich somit eine Einsparung an Montagezeit und eine Verringerung von Fehlerquellen.

**Patentansprüche**

1. Fest in einem Fensterrahmen (4) eingebaute, bündig mit der Karosserie verlaufende Fensterscheibe (2) für Kraftfahrzeuge, die über ein mit ihr (2) durch Kleben, Vulkanisieren oder Anspritzen verbundenes Halteprofil (6) mit dem Fensterrahmen (4) verbunden ist, der einen parallel zur Fensterscheibe (2) verlaufenden Flansch (10) besitzt, auf dessen vom Scheibenrand abgewandten Abschnitt (12) das Halteprofil aufgeschoben ist, dadurch gekennzeichnet, daß die Fensterscheibe (2) und das Halteprofil (6) sich über einen weiteren äußeren Abschnitt (14) des Flansches (10) etwa bis zu dessen Ende erstrecken, wobei zwischen diesem weiteren Abschnitt (14) des Flansches (10) und dem Halteprofil (6) ein Zwischenraum (20) vorgesehen ist, der zum Aufstecken eines Türdichtungsprofils (22) auf den weiteren Abschnitt (14) des Flansches (10) dient.

2. Fensterscheibe nach Anspruch 1, dadurch gekennzeichnet, daß das Halteprofil (6) im Bereich des weiteren äußeren Abschnittes (14) des Flansches (10) mit geringer Höhe ausgebildet ist und im Bereich des Abschnittes (12) des Flanches (10) eine Nase (28) zur Anlage am Flansch (10) und zur Abdichtung bildet.

3. Fensterscheibe nach Anspruch 1 und 2, dadurch gekennzeichnet, daß in einer Nut (16) des Halteprofils (6) in Abständen angeordnete Anschläge (18) vorgesehen sind, die an der Stirnseite des Flansches (10) anliegen.

4. Fensterscheibe nach Anspruch 1 bis 3, dadurch gekennzeichnet, daß das Halteprofil (6) einen etwa dreieckförmigen Bereich (30) aufweist, von dem eine Seite (31) unter Druckspannung diagonal in eine Ausnehmung (32) des Fensterrahmens (4) eingesetzt ist.

5. Fensterscheibe nach Anspruch, dadurch gekennzeichnet, daß das Türdichtungsprofil (22) über den oberen und hinteren Bereich des Fensterrahmens (4) verläuft.

6. Fensterscheibe nach Anspruch 1 bis, dadurch gekennzeichnet, daß das Halteprofil (6) mit einem an einer mittleren Fensterführungsschiene (34) verankerten und ebenfalls an der Fensterscheibe (2) angespritzen Profil (8) verbunden ist und Halteprofil (6) und Profil (8) die Fensterscheibe (2) in Längs- und Querrichtung halten.

## Claims

1. Window pane (2) for motor vehicles, rigidly mounted in a window frame (4) running flush with the body of the motor vehicle, the window pane (2) having a holding profile (6) attached to it by glueing, vulcanising or injection moulding and through this is connected with the window frame (4) which has a flange (10), extending parallel to the window pane (2), whose section (12) facing away from the edge of the window pane (2) has the holding profile push-fitted onto it, characterised in that the window pane (2) and the holding profile (6), through an additional outer section (14) of the flange (10), extend approximately to the end of the flange, and between this additional section (14) of the flange (10) and the holding profile (6) there is provided an intermediate space (20) which serves for plug-fitting a door sealing profile (22) on the additional section (14) of the flange (10).

2. Window pane according claim 1, characterised in that the holding profile (6) in the region of the additional outer section (14) of the flange (10) is of a reduced height and in the region of the section (12) of the flange (10) forms a nose (28) for abutment with flange (10) and for sealing.

3. Window pane according to claim 1 and 2, characterised in that in a groove (16) of the holding profile (6) there are spaced abutments (18) which rest against the front face of the flange (10).

4. Window pane according to claim 1 to 3, characterised in that the holding profile (6) has an approximately triangular-shaped region (30) of which one side (31) is inserted under compressive strain diagonally in a recess (32) of the window frame (4).

5. Window pane according to claim, characterised in that door sealing profile (22) extends over the upper and rearward region of the window frame (4).

6. Window pane according to claim 1 to 4, characterised in that the holding profile (6) is connected with a profile (8) anchored to a central window guide rail (34) and also injection moulded to the window pane (2), and holding profile (6) and profile (8) retain the window pane (2) in the longitudinal and transverse direction.

## Revendications

1. Vitre (2) pour véhicules automobiles montée de manière fixe dans un cadre de fenêtre (4), s'étendant au ras de la carosserie et reliée par l'intermédiaire d'un profilé de maintien (6) assemblé à ladite vitre (2) par collage, vulcanisation ou moulage par injection, au cadre de fenêtre (4) qui possède une semelle (10) qui s'étend parallèlement à la vitre (2) et présente une aile (12) éloignée du bord de la vitre sur laquelle est engagé le profilé de maintien, caractérisée en ce que la vitre (2) et le profilé de maintien (6) s'étendent sur une autre aile extérieure (14) de la semelle (10), environ jusqu'à son extrémité, un espace intermédiaire (20) qui sert à l'emboîtement d'un profilé d'étanchéité de porte (22) sur l'autre aile (14) de la semelle (10) étant prévu entre cette autre aile (14) de la semelle (10) et le profilé de maintien (6).

2. Vitre selon revendication 1, caractérisée en ce que le profilé de maintien (6) présente une hauteur plus faible dans la zone de l'autre aile extérieure (14) de la semelle (10) et forme dans la zone de l'aile (12) de la semelle (10) un nez (28) destiné à prendre appui sur la semelle (10) et à assurer l'étanchéité.

3. Vitre selon revendication 1 ou 2, caractérisée en ce que des butées (18) espacées les unes des autres qui prennent appui sur le côté frontal de la semelle (10) sont prévues dans un encoche (16) du profilé de maintien (6).

4. Vitre selon revendication 1 à 3, caractérisée en ce que le profilé de maintien (6) présente une zone à peu près triangulaire (30) dont un côté (31) est inséré sous compression diagonalement dans un évidement (32) du cadre de fenêtre (4).

5. Vitre selon revendication 1, caractérisée en ce que le profilé d'étanchéité de porte (22) s'étend sur la zone supérieure et arrière du cadre de fenêtre (4).

6. Vitre selon revendication 1 à 4, caractérisée en ce que le profilé de maintien (6) est reliée à un profilé (8) également moulé par injection sur la vitre (2) et ancré sur un rail médian de guidage de fenêtre (34) et en ce que le profilé de maintien (6) et le profilé (8) maintiennent la vitre (2) dans les directions longitudinale et transversale.

FIG. 1

FIG. 4

FIG. 3

FIG. 2